# EUROPÄISCHE PATENTSCHRIFT

(11) **EP 2 813 398 B1**
(45) Veröffentlichungstag und Bekanntmachung des Hinweises auf die Patenterteilung: **22.07.2015**
(21) Anmeldenummer: 13171978.3
(22) Anmeldetag: 14.06.2013
(51) Int. Cl.: B60R 15/04

(54) **Innenausbauvorrichtung**
Interior construction device
Dispositif d'aménagement intérieur

(43) Veröffentlichungstag der Anmeldung: 17.12.2014
(73) Patentinhaber: Carthago Reisemobilbau GmbH, 88326 Aulendorf (DE)
(72) Erfinder: Schuler, Karl-Heinz, 88255 Köpfingen über Baienfurt (DE)
(74) Vertreter: Daub, Thomas

(56) Entgegenhaltungen:
- DE-A1- 2 423 561
- DE-A1- 4 209 048
- DE-U1- 7 726 928
- FR-A5- 2 049 440
- US-A- 2 443 214
- US-A- 5 765 237
- US-A- 6 079 770

## Beschreibung

### Stand der Technik

Die Erfindung betrifft eine Innenausbauvorrichtung nach dem Oberbegriff des Anspruchs 1.

Es ist bereits eine Innenausbauvorrichtung mit einer Toilettengrundeinheit, die in einer ersten Konfiguration in einem Sanitärbereich angeordnet ist, wobei die Toilettengrundeinheit in einem montierten Zustand zumindest teilweise bewegbar ausgebildet ist, vorgeschlagen worden.

Derartige Innenausbauvorrichtungen finden sich insbesondere in Wohnwagen und/oder in Wohnmobilen, insbesondere auf Kastenwagen basierenden kompakten Wohnmobilen. Die Toilettengrundeinheit ist dabei im Sanitärbereich fest an einem Innenausbauboden oder einem Sanitärbodenkörper montiert. Innerhalb des Sanitärbereichs sind neben der Toilettengrundeinheit weitere sanitäre Vorrichtungen angeordnet, wie insbesondere eine Duschvorrichtung und/oder eine Waschvorrichtung. Dabei müssen oft Einschränkungen hinsichtlich der Bewegungsfreiheit hingenommen werden. Dies ist insbesondere dann der Fall, wenn der Sanitärbereich ein Kombibad umfasst, welches sowohl eine Duschvorrichtung als auch eine Toilette aufweist. Vor allem bei Innenausbauvorrichtungen für Kastenwagen existiert das Bedürfnis, in einem begrenzten Sanitärbereich einen besonders großen Bewegungsfreiraum zu erzielen, ohne auf sanitäre Vorrichtungen, wie insbesondere eine Duschvorrichtung verzichten zu müssen.

Aus der gattungsgemäßen US 5,765,237 A und der US 6,079,770 A ist bereits eine Innenausbauvorrichtung mit einer Toilettengrundeinheit bekannt, die in einer ersten Konfiguration in einem Sanitärbereich angeordnet ist, wobei die Toilettengrundeinheit in einem montierten Zustand bewegbar ausgebildet ist.

Auch die DE 24 23 561 A1 und die DE 42 090 48 A1 schlagen bereits eine Innenausbauvorrichtung mit einer Toilettengrundeinheit vor, die in einer ersten Konfiguration in einem Sanitärbereich angeordnet ist, wobei die Toilettengrundeinheit in einem montierten Zustand bewegbar ausgebildet ist.

Eine weitere Innenausbauvorrichtung mit einer Toilettengrundeinheit, die in einer ersten Konfiguration in einem Sanitärbereich angeordnet ist, wobei die Toilettengrundeinheit in einem montierten Zustand bewegbar ausgebildet ist, kann der DE 77 26 928 U1 und der FR 2049440 A5 entnommen werden.

Die Aufgabe der Erfindung besteht insbesondere darin, eine gattungsgemäße Innenausbauvorrichtung mit einem vergrößerten Benutzerkomfort, insbesondere innerhalb eines Sanitärbereichs, bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Innenausbauvorrichtung, insbesondere für ein Wohnmobil, einen Wohnwagen und/oder einen Kastenwagen, mit einer Toilettengrundeinheit, die in einer ersten Konfiguration in einem Sanitärbereich angeordnet ist, wobei die Toilettengrundeinheit in einem montierten Zustand zumindest teilweise bewegbar ausgebildet ist.

Es wird vorgeschlagen, dass die Innenausbauvorrichtung eine Waschbeckenabdeckeinheit aufweist, die dazu vorgesehen ist, in zumindest einer zweiten Konfiguration ein Waschbecken abzudecken. Dadurch kann bei großer Bewegungsfreiheit innerhalb des Sanitärbereichs das Waschbecken beispielsweise bei einem Duschvorgang vorteilhaft vor Spritzwasser geschützt werden. Unter einer "Waschbeckenabdeckeinheit" soll in diesem Zusammenhang insbesondere eine Einheit verstanden werden, die dazu vorgesehen ist, ein Waschbecken vor Spritzwasser, insbesondere einer Duscheinheit, zu schützen. Bevorzugt weist die Waschbeckenabdeckeinheit zumindest ein erstes Waschbeckenabdeckelement auf. Weiterhin vorteilhaft weist die Waschbeckenabdeckeinheit zumindest ein zweites Waschbeckenabdeckelement auf. Unter einer "Toilettengrundeinheit" soll in diesem Zusammenhang insbesondere eine Einheit verstanden werden, die zumindest einen Toilettengrundkörper und/oder ein Toilettenbefestigungselement umfasst. Unter einem "Toilettengrundkörper" soll in diesem Zusammenhang insbesondere ein Grundkörper einer Toilette verstanden werden. Vorteilhaft ist der Toilettengrundkörper von einer Toilettenschüssel gebildet. Unter einem "Toilettenbefestigungselement" soll in diesem Zusammenhang insbesondere ein Element verstanden werden, das zur Befestigung eines Toilettengrundkörpers vorgesehen ist. Bevorzugt ist das Toilettenbefestigungselement plattenförmig ausgebildet. Unter einer "Konfiguration" soll in diesem Zusammenhang insbesondere eine Stellung von zumindest einem Innenausbauteil, insbesondere der Toilettengrundeinheit, zur Erzielung einer bestimmten Nutzungsfunktion der Innenausbauvorrichtung verstanden werden. Vorteilhaft umfasst die erste Konfiguration eine Sanitärkonfiguration. Unter einer "Sanitärkonfiguration" soll in diesem Zusammenhang insbesondere eine Konfiguration verstanden werden, die dazu vorgesehen ist, eine Toilette in einem Sanitärbereich bereitzustellen. Unter einem "Sanitärbereich" soll in diesem Zusammenhang insbesondere ein Bereich verstanden werden, der zumindest eine sanitäre Einrichtung, wie insbesondere eine Duschvorrichtung und/oder eine Toilette, für einen Benutzer umfasst. Bevorzugt weist der Sanitärbereich in der ersten Konfiguration ein Kombibad auf. Unter einem "Kombibad" soll in diesem Zusammenhang insbesondere ein zusammenhängender Sanitärbereich verstanden werden, der zumindest eine Toilette und zumindest eine Duscheinheit beinhaltet. Bevorzugt umfasst das Kombibad ferner zumindest ein Waschbecken. Unter einer "Duscheinheit" soll in diesem Zusammenhang insbesondere eine Einheit verstanden werden, die dazu vorgesehen ist, eine Duschmöglichkeit für einen Benutzer bereitzustellen. Bevorzugt weist die Duscheinheit zumindest einen Duschkopf auf. Weiterhin vorteilhaft weist die Duscheinheit zumindest eine Duschwanne auf. Unter einem "montierten Zustand" soll in diesem Zusammenhang insbesondere ein werkseitig installierter Zustand verstanden werden. Insbesondere ist zu einer Demontage zumindest ein Demontagewerkzeug erforderlich. Die Toilettengrundeinheit ist in einem montierten Zustand unverlierbar mit der Innenausbauvorrichtung verbunden. Ein Entfernen, Lösen, Anheben und/oder Demontieren der Toilettengrundeinheit von der Innenausbauvorrichtung ist im montierten Zustand nicht möglich. Unter "vorgesehen" soll in diesem Zusammenhang insbesondere speziell ausgebildet, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

In einer weiteren Ausgestaltung der Erfindung wird vorgeschlagen, dass die Toilettengrundeinheit zur Herstellung einer zweiten Konfiguration zumindest teilweise aus dem Sanitärbereich in einen Toilettenverstaubereich bewegbar ist. Unter einem "Toilettenverstaubereich" soll in diesem Zusammenhang insbesondere ein Bereich verstanden werden, der dazu vorgesehen ist, zumindest die Toilettengrundeinheit bei einer Nichtbenutzung zumindest teilweise, bevorzugt zum Großteil, zu verstauen. Bevorzugt grenzt der Toilettenverstaubereich an den Sanitärbereich an. Unter "bewegbar" soll in diesem Zusammenhang linear verschiebbar und/oder bevorzugt schwenkbar verstanden werden. Vorteilhaft umfasst die zweite Konfiguration eine Duschkonfiguration. Unter einer "Duschkonfiguration" soll in diesem Zusammenhang insbesondere eine Konfiguration verstanden werden, die dazu vorgesehen ist, eine Duscheinheit beziehungsweise eine Duschmöglichkeit im Sanitärbereich bereitzustellen. Insbesondere wird bei einer Duschkonfiguration ein Duschbereich bereitgestellt, welcher einen Bewegungsfreiraum für einen Duschvorgang schafft.

Ferner wird vorgeschlagen, dass die Toilettengrundeinheit schwenkbar ausgebildet ist, wodurch ein Duschbereich besonders einfach und kraftsparend vergrößert werden kann.

Des Weiteren wird vorgeschlagen, dass eine Schwenkachse der Toilettengrundeinheit zumindest im Wesentlichen senkrecht zu einem Innenausbauboden verläuft. Unter "zumindest im Wesentlichen" soll in diesem Zusammenhang insbesondere eine Abweichung von maximal 10°, bevorzugt von maximal 5°, besonders bevorzugt von maximal 1° verstanden werden.

In einer weiteren Ausgestaltung der Erfindung wird vorgeschlagen, dass die Waschbeckenabdeckeinheit schwenkbar gelagert ist, wodurch ein Abdecken eines Waschbeckens auf besonders schnelle und einfache Weise erfolgen kann. Bevorzugt verläuft eine Schwenkachse der Waschbeckenabdeckeinheit zumindest im Wesentlichen senkrecht zu einem Innenausbauboden.

Eine besonders kompakte Verstauung der Waschbeckenabdeckeinheit kann erreicht werden, wenn die Waschbeckenabdeckeinheit zumindest zwei Waschbeckenabdeckelemente umfasst, die schwenkbar zueinander angeordnet sind. Bevorzugt verläuft eine Schwenkachse zwischen dem zumindest einen ersten Waschbeckenabdeckelement und dem zumindest einen zweiten Waschbeckenabdeckelement zumindest im Wesentlichen senkrecht zu einem Innenausbauboden. Unter einem "Waschbeckenabdeckelement" soll in diesem Zusammenhang insbesondere eine Trennwandung verstanden werden, die dazu vorgesehen ist, das Waschbecken in zumindest einer Konfiguration abzudecken. Bevorzugt ist das Waschbeckenabdeckelement starr ausgebildet.

Umfasst die Innenausbauvorrichtung eine Toilettenabdeckeinheit, die dazu vorgesehen ist, in der zumindest einen zweiten Konfiguration den Toilettenverstaubereich zum Sanitärbereich hin abzudecken, kann die im Toilettenverstaubereich angeordnete Toilettengrundeinheit vorteilhaft vor Spritzwasser, insbesondere einer Duscheinheit, geschützt werden. Unter einer "Toilettenabdeckeinheit" soll in diesem Zusammenhang insbesondere eine Einheit verstanden werden, die dazu vorgesehen ist, zumindest die Toilettengrundeinheit abzudecken und/oder vor Spritzwasser zu schützen. Bevorzugt umfasst die Toilettenabdeckeinheit zumindest ein Toilettenabdeckelement. Unter einem "Toilettenabdeckelement" soll in diesem Zusammenhang insbesondere eine Trennwandung verstanden werden, die dazu vorgesehen ist, die Toilettengrundeinheit in zumindest einer Konfiguration abzudecken. Bevorzugt ist das Toilettenabdeckelement starr ausgebildet. Unter "abdecken" soll in diesem Zusammenhang insbesondere zumindest zum Großteil abschirmen verstanden werden.

Des Weiteren wird vorgeschlagen, dass die Toilettenabdeckeinheit zumindest zwei Toilettenabdeckelemente umfasst, die schwenkbar zueinander angeordnet sind. Bevorzugt verläuft eine Schwenkachse zwischen dem zumindest einen ersten Toilettenabdeckelement und dem zumindest einen zweiten Toilettenabdeckelement zumindest im Wesentlichen senkrecht zu einem Innenausbauboden.

Es wird ferner ein Verfahren zur Änderung zumindest einer Konfiguration einer Innenausbauvorrichtung vorgeschlagen, wobei zumindest eine Toilettengrundeinheit, die in einer ersten Konfiguration in einem Sanitärbereich angeordnet ist, zur Erzielung zumindest einer zweiten Konfiguration in einem montierten Zustand zumindest teilweise bewegt wird.

Die erfindungsgemäße Innenausbauvorrichtung soll hierbei nicht auf die oben beschriebene Anwendung und Ausführungsform beschränkt sein. Insbesondere kann die erfindungsgemäße Innenausbauvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Grundriss einer Innenausbauvorrichtung in einer ersten Konfiguration und
- Fig. 2: einen Grundriss der Innenausbauvorrichtung in einer zweiten Konfiguration.

### Beschreibung des Ausführungsbeispiels

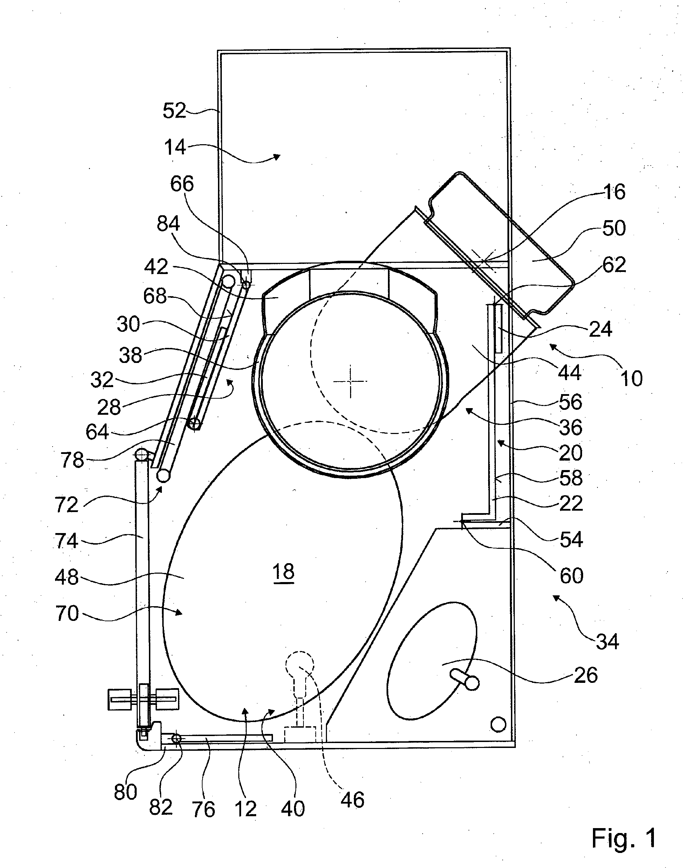

Figur 1 zeigt einen Grundriss einer Innenausbauvorrichtung in einer ersten Konfiguration, die in einem Fahrzeug 34 angeordnet ist. Das Fahrzeug 34 ist von einem Wohnmobil gebildet. Präziser gesagt, ist das Fahrzeug 34 von einem Kastenwagen gebildet, der zu einem Wohnmobil ausgebaut ist. Die Innenausbauvorrichtung weist eine Toilettengrundeinheit 10 auf. Die Toilettengrundeinheit 10 ist Teil einer Toilette 36 der Innenausbauvorrichtung.

Die Toilettengrundeinheit 10 umfasst einen Toilettengrundkörper 42. Ferner umfasst die Toilettengrundeinheit 10 ein Toilettenbefestigungselement 44. Der Toilettengrundkörper 42 ist von einer Toilettenschüssel gebildet. Der Toilettengrundkörper 42 ist dabei aus einem Kunststoff hergestellt. Es ist in diesem Zusammenhang jedoch auch denkbar, dass der Toilettengrundkörper 42 aus Keramik hergestellt ist. Das Toilettenbefestigungselement 44 ist zur Befestigung des Toilettengrundkörpers 42 an einem Innenausbauboden 18 vorgesehen. Das Toilettenbefestigungselement 44 ist plattenförmig ausgebildet. Der Toilettengrundkörper 42 weist ein drehbar gelagertes Toilettensitzteil 38 auf. Die Toilette 36 weist ferner einen Toilettenspülkasten 50 auf. Der Toilettenspülkasten 50 ist am Toilettenbefestigungselement 44 angeordnet.

Die Innenausbauvorrichtung weist einen Sanitärbereich 12 auf. Die Toilettengrundeinheit 10 ist in einer ersten Konfiguration in dem Sanitärbereich 12 angeordnet. Die erste Konfiguration umfasst eine Sanitärkonfiguration. Der Sanitärbereich 12 weist in der ersten Konfiguration ein Kombibad auf. In anderen Worten umfasst der Sanitärbereich 12 die Toilette 36 und eine Duscheinheit 40. Die Duscheinheit 40 weist einen Duschkopf 46 auf. Ferner weist die Duscheinheit 40 eine Duschwanne 48 auf. Die Duschwanne 48 weist ein nicht näher dargestelltes, begehbares Gitter auf, durch welches Wasser aus dem Sanitärbereich 12 abfließen kann. Die Innenausbauvorrichtung umfasst ferner eine Türe 74, die eine Zugangsmöglichkeit zum Sanitärbereich 12 von einem nicht näher dargestellten Wohnbereich bildet.

Ferner umfasst der Sanitärbereich 12 ein Waschbecken 26. Die Toilettengrundeinheit 10 ist in einem montierten Zustand. Dabei ist die Toilettengrundeinheit 10 werkseitig installiert. Die Toilettengrundeinheit 10 ist unverlierbar mit der Innenausbauvorrichtung verbunden.

Der Toilettengrundeinheit 10 ist in dem montierten Zustand bewegbar ausgebildet. Genauer gesagt ist die Toilettengrundeinheit 10 im montierten Zustand relativ zum Innenausbauboden 18 bewegbar ausgebildet. Dabei ist die Toilettengrundeinheit 10 über ein nicht näher dargestelltes Gelenk, die eine Schwenkachse 16 der Toilettengrundeinheit 10 ausbildet, mit dem Innenausbauboden 18 verbunden. Das Gelenk ist dabei an dem Toilettenbefestigungselement 44 angeordnet. Es ist in diesem Zusammenhang auch denkbar, dass die Toilettengrundeinheit 10 mit einer Innenausbauseitenwandung über das Gelenk schwenkbar verbunden ist. Die Schwenkachse 16 der Toilettengrundeinheit 10 verläuft senkrecht zu dem Innenausbauboden 18.

Zur Herstellung einer zweiten Konfiguration ist die Toilettengrundeinheit 10 teilweise aus dem Sanitärbereich 12 in einen Toilettenverstaubereich 14 bewegbar ausgebildet. Genauer gesagt, lässt sich die Toilettengrundeinheit 10 aus dem Sanitärbereich 12 in den Toilettenverstaubereich 14 teilweise wegschwenken. Der Toilettenverstaubereich 14 grenzt direkt an den Sanitärbereich 12 an. Zu einer weiteren Umgebung hin ist der Toilettenverstaubereich 14 durch eine Wandung 52 abgegrenzt.

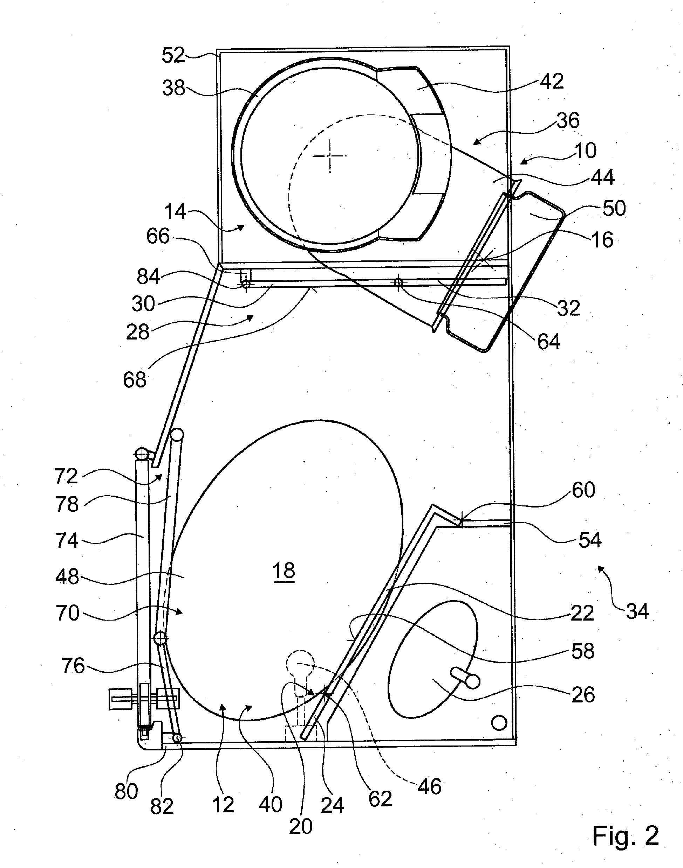

Die Figur 2 zeigt die zweite Konfiguration der Innenausbauvorrichtung. Der Toilettengrundkörper 42 ist vollständig innerhalb des Toilettenverstaubereichs 14 angeordnet. Das Toilettenbefestigungselement 44 ist teilweise innerhalb des Toilettenverstaubereichs 14 angeordnet.

Die Innenausbauvorrichtung weist zusätzlich eine Waschbeckenabdeckeinheit 20 auf, die dazu vorgesehen ist, in der zweiten Konfiguration das Waschbecken 26 abzudecken. Die Waschbeckenabdeckeinheit 20 ist schwenkbar gelagert. Genauer gesagt, weist die Waschbeckenabdeckeinheit 20 ein erstes Waschbeckenabdeckelement 22 und ein zweites Waschbeckenabdeckelement 24 auf. Das erste Waschbeckenabdeckelement 22 ist schwenkbar an einer feststehenden Innenraumwand 54 angeordnet. Ferner weist das erste Waschbeckenabdeckelement 22 einen im Wesentlichen L-förmigen Querschnitt auf.

Das erste Waschbeckenabdeckelement 22 ist von einer Trennwandung gebildet. Das zweite Waschbeckenabdeckelement 24 ist ebenfalls von einer Trennwandung gebildet. Das erste Waschbeckenabdeckelement 22 ist starr ausgebildet. Des Weiteren ist das zweite Waschbeckenabdeckelement 24 starr ausgebildet. Die Waschbeckenabdeckelemente 22, 24 sind schwenkbar zueinander angeordnet. Das zweite Waschbeckenabdeckelement 24 liegt in der ersten Konfiguration an einer Außenwandung 56 der Innenausbauvorrichtung an. Ferner liegt das zweite Waschbeckenabdeckelement 24 in der ersten Konfiguration am ersten Waschbeckenabdeckelement 22 an. Eine Abdeckfläche 58 des ersten Waschbeckenabdeckelements 22 verläuft parallel zur Außenwandung 56.

Die Waschbeckenabdeckeinheit 20 weist eine erste Schwenkachse 60 und eine zweite Schwenkachse 62 auf. Zur Herstellung der zweiten Konfiguration wird das erste Waschbeckenabdeckelement 22 um die erste Schwenkachse 60 geschwenkt. Anschließend wird das zweite Waschbeckenabdeckelement 24 um die zweite Schwenkachse 62 relativ zum ersten Waschbeckenabdeckelement 22 geschwenkt. Die zweite Schwenkachse 62 zwischen dem ersten Waschbeckenabdeckelement 22 und dem zweiten Waschbeckenabdeckelement 24 verläuft senkrecht zum Innenausbauboden 18. Auch die erste Schwenkachse 60 zwischen dem ersten Waschbeckenabdeckelement 22 und der Innenraumwand 54 verläuft senkrecht zum Innenausbauboden 18.

In der zweiten Konfiguration bilden das erste Waschbeckenabdeckelement 22 und das zweite Waschbeckenabdeckelement 24 eine zumindest im Wesentlichen ebene Abdeckfläche 58. Die Abdeckfläche 58 deckt das Waschbecken 26 in Richtung des Sanitärbereichs 12 zumindest zum Großteil ab. In der zweiten Konfiguration ist das Waschbecken 26 somit vor im Sanitärbereich 12 erzeugtem Spritzwasser zumindest weitestgehend geschützt. Es ist in diesem Zusammenhang prinzipiell denkbar, dass ein Fachmann das Waschbecken 26 auf eine andere ihm als sinnvoll erscheinende Weise, wie insbesondere durch einen Vorhang, vor Spritzwasser schützt.

Ferner umfasst die Innenausbauvorrichtung eine Toilettenabdeckeinheit 28. Die Toilettenabdeckeinheit 28 deckt in der zweiten Konfiguration den Toilettenverstaubereich 14 zum Sanitärbereich 12 hin ab. Die Toilettenabdeckeinheit 28 umfasst ein erstes Toilettenabdeckelement 30. Ferner umfasst die Toilettenabdeckeinheit 28 ein zweites Toilettenabdeckelement 32. Das erste Toilettenabdeckelement 30 ist von einer Trennwandung gebildet und dazu vorgesehen, die Toilettengrundeinheit 10 in der zweiten Konfiguration zumindest zum Großteil abzudecken. Das zweite Toilettenabdeckelement 32 ist ebenfalls von einer Trennwandung gebildet und dazu vorgesehen, die Toilettengrundeinheit 10 in der zweiten Konfiguration zumindest zum Großteil abzudecken. Das erste Toilettenabdeckelement 30 ist dabei starr ausgebildet. Das zweite Toilettenabdeckelement 32 ist ebenfalls starr ausgebildet.

Die Toilettenabdeckelemente 30, 32 sind schwenkbar zueinander angeordnet. Eine Schwenkachse 64 zwischen dem ersten Toilettenabdeckelement 30 und dem zweiten Toilettenabdeckelement 32 verläuft senkrecht zum Innenausbauboden 18. Das erste Toilettenabdeckelement 30 ist ferner über eine Schwenkachse 84 mit einer Innenraumwand 66 schwenkbar verbunden. In der ersten Konfiguration ist die Toilettenabdeckeinheit 28 in der Nähe der Innenraumwand 66 angeordnet. Eine Abdeckfläche 68 der Toilettenabdeckeinheit 28 verläuft dabei parallel zur Innenraumwand 66. In der zweiten Konfiguration ist das erste Toilettenabdeckelement 30 relativ zur Innenraumwand 66 verschwenkt.

Das am ersten Toilettenabdeckelement 30 schwenkbar angeordnete zweite Toilettenabdeckelement 32 ist relativ zum ersten Toilettenabdeckelement 30 verschwenkt. Das erste Toilettenabdeckelement 30 und das zweite Toilettenabdeckelement 32 bilden in der zweiten Konfiguration eine ebene Abdeckfläche 68. Die Toilettenabdeckeinheit 28 trennt in der zweiten Konfiguration den Sanitärbereich 12 vom Toilettenverstaubereich 14 ab. Die Toilettenabdeckeinheit 28 ist somit dazu vorgesehen, die Toilettengrundeinheit 10 in der zweiten Konfiguration abzudecken und vor Spritzwasser zu schützen.

Ferner umfasst die Innenausbauvorrichtung eine Türabdeckeinheit 72. Die Türabdeckeinheit 72 deckt in der zweiten Konfiguration die Türe 74 zum Sanitärbereich 12 hin ab. Die Türabdeckeinheit 72 umfasst ein erstes Türabdeckelement 76. Ferner umfasst die Türabdeckeinheit 72 ein zweites Türabdeckelement 78. Das erste Türabdeckelement 76 ist von einer Trennwandung gebildet und dazu vorgesehen, die Türe 74 in der zweiten Konfiguration zumindest zum Großteil abzudecken. Das zweite Türabdeckelement 78 ist ebenfalls von einer Trennwandung gebildet und dazu vorgesehen, die Türe 74 in der zweiten Konfiguration zumindest zum Großteil abzudecken. Das erste Türabdeckelement 76 ist dabei starr ausgebildet. Das zweite Türabdeckelement 78 ist ebenfalls starr ausgebildet.

Das erste Türabdeckelement 76 ist schwenkbar zu einer feststehenden Innenraumwand 80 ausgebildet. Eine Schwenkachse 82 zwischen dem ersten Türabdeckelement 76 und der Innenraumwand 80 verläuft senkrecht zum Innenausbauboden 18. Das zweite Türabdeckelement 78 ist in einer nicht näher gezeigten Kulissenführung verschiebbar gelagert. In der ersten Konfiguration ist das erste Türabdeckelement 76 in der Nähe der Innenraumwand 80 angeordnet. In der zweiten Konfiguration ist das erste Türabdeckelement 76 relativ zur Innenraumwand 80 verschwenkt und deckt die Türe 74 zum Sanitärbereich 12 teilweise ab. Ein restlicher Teil der Türe 74 wird in der zweiten Konfiguration von dem zweiten Türabdeckelement 76 abgedeckt, die vor die Türe 74 verschoben ist. In der zweiten Konfiguration liegen das erste Türabdeckelement 76 und das zweite Türabdeckelement 78 aneinander an. Die Türabdeckeinheit 72 ist somit dazu vorgesehen, die Türe 74 in der zweiten Konfiguration abzudecken und vor Spritzwasser zu schützen.

Die gezeigte zweite Konfiguration bildet nun eine Duschkonfiguration. Die Duschkonfiguration stellt eine Duschmöglichkeit im Sanitärbereich 12 bereit. Dabei wird ein Duschbereich 70 bereitgestellt. Bei einem Duschvorgang ist der Toilettengrundkörper 42 vor Spritzwasser geschützt. Ebenso sind die Türe 74 und das Waschbecken 26 vor Spritzwasser geschützt. Die Duscheinheit 40 weist zur Durchführung des Duschvorgangs einen Duschkopf 46 und eine nicht näher dargestellte Duscharmatur auf. Nach Beendigung des Duschvorgang lassen sich die Waschbeckenabdeckeinheit 20, die Toilettenabdeckeinheit 28 und die Türabdeckeinheit 72 zurück in eine Verstauposition bewegen. Durch ein Zurückschwenken der Toilettengrundeinheit 10 in den Sanitärbereich 12 ist die erste Konfiguration wiederhergestellt.

### Bezugszeichen

- 10: Toilettengrundeinheit
- 12: Sanitärbereich
- 14: Toilettenverstaubereich
- 16: Schwenkachse
- 18: Innenausbauboden
- 20: Waschbeckenabdeckeinheit
- 22: Waschbeckenabdeckelement
- 24: Waschbeckenabdeckelement
- 26: Waschbecken
- 28: Toilettenabdeckeinheit
- 30: Toilettenabdeckelement
- 32: Toilettenabdeckelement
- 34: Fahrzeug
- 36: Toilette
- 38: Toilettensitzteil
- 40: Duscheinheit
- 42: Toilettengrundkörper
- 44: Toilettenbefestigungselement
- 46: Duschkopf
- 48: Duschwanne
- 50: Toilettenspülkasten
- 52: Wandung
- 54: Innenraumwand
- 56: Außenwandung
- 58: Abdeckfläche
- 60: Schwenkachse
- 62: Schwenkachse
- 64: Schwenkachse
- 66: Innenraumwand
- 68: Abdeckfläche
- 70: Duschbereich
- 72: Türabdeckeinheit
- 74: Türe
- 76: Türabdeckelement
- 78: Türabdeckelement
- 80: Innenraumwand
- 82: Schwenkachse
- 84: Schwenkachse

## Patentansprüche

1. Innenausbauvorrichtung, insbesondere für ein Wohnmobil, einen Wohnwagen und/oder einen Kastenwagen, mit einer Toilettengrundeinheit (10), die in einer ersten Konfiguration in einem Sanitärbereich (12) angeordnet ist, wobei die Toilettengrundeinheit (10) in einem montierten Zustand zumindest teilweise bewegbar ausgebildet ist, **gekennzeichnet durch** eine Waschbeckenabdeckeinheit (20), die dazu vorgesehen ist, in zumindest einer zweiten Konfiguration ein Waschbecken (26) abzudecken.

2. Innenausbauvorrichtung nach Anspruch 1, **dadurch gekennzeichnet, dass** die Toilettengrundeinheit (10) zur Herstellung einer zweiten Konfiguration zumindest teilweise aus dem Sanitärbereich (12) in einen Toilettenverstaubereich (14) bewegbar ausgebildet ist.

3. Innenausbauvorrichtung nach Anspruch 1 oder 2, **dadurch gekennzeichnet, dass** die Toilettengrundeinheit (10) zumindest schwenkbar ausgebildet ist.

4. Innenausbauvorrichtung nach Anspruch 3, **dadurch gekennzeichnet, dass** eine Schwenkachse (16) der Toilettengrundeinheit (10) zumindest im Wesentlichen senkrecht zu einem Innenausbauboden (18) verläuft.

5. Innenausbauvorrichtung nach einem der vorhergehenden Ansprüche, **dadurch gekennzeichnet, dass** die Waschbeckenabdeckeinheit (20) schwenkbar gelagert ist.

6. Innenausbauvorrichtung nach einem der vorhergehenden Ansprüche, **dadurch gekennzeichnet, dass** die Waschbeckenabdeckeinheit (20) zumindest zwei Waschbeckenabdeckelemente (22, 24) umfasst, die schwenkbar zueinander angeordnet sind.

7. Innenausbauvorrichtung zumindest nach Anspruch 2, **gekennzeichnet durch** eine Toilettenabdeckeinheit (28), die dazu vorgesehen ist, in der zumindest einen zweiten Konfiguration den Toilettenverstaubereich (14) zum Sanitärbereich (12) hin abzudecken.

8. Innenausbauvorrichtung nach Anspruch 7, **dadurch gekennzeichnet, dass** die Toilettenabdeckeinheit (28) zumindest zwei Toilette nabdeckelemente (30, 32) umfasst, die schwenkbar zueinander angeordnet sind.

9. Innenausbauvorrichtung nach einem der vorhergehenden Ansprüche, **dadurch gekennzeichnet, dass** die zumindest eine erste Konfiguration eine Sanitärkonfiguration umfasst.

10. Innenausbauvorrichtung zumindest nach Anspruch 2, **dadurch gekennzeichnet, dass** die zumindest eine zweite Konfiguration eine Duschkonfiguration umfasst.

## Claims

1. Interior construction device, in particular for a mobile home, a caravan and/or a van, with a basic WC unit (10), which is arranged in a first configuration in a sanitary region (12), the basic WC unit (10) being embodied such that it is at least partially movable in a mounted state, **characterized by** a wash basin cover unit (20), which is provided to cover a wash basin (26) in at least one second configuration.

2. Interior construction device according to claim 1, **characterized in that** for creating a second configuration the basic WC unit (10) is embodied such that it is at least partially movable out of the sanitary region (12) into a WC stowage region (14).

3. Interior construction device according to claim 1 or 2, **characterized in that** the basic WC unit (10) is embodied at least pivotable.

4. Interior construction device according to claim 3, **characterized in that** a pivot axis (16) of the basic WC unit (10) extends at least substantially perpendicularly with respect to an interior construction floor (18).

5. Interior construction device according to one of the preceding claims, **characterized in that** the wash basin cover unit (20) is pivotably supported.

6. Interior construction device according to one of the preceding claims, **characterized in that** the wash basin cover unit (20) comprises at least two wash basin cover elements (22, 24), which are arranged such that they are pivotable with respect to each other.

7. Interior construction device at least according to claim 2, **characterized by** a WC cover unit (28), which is provided to cover in the at least one second configuration the WC stowage region (14) toward the sanitary region (12).

8. Interior construction device according to claim 7, **characterized in that** the WC cover unit (28) comprises at least two WC cover elements (30, 32), which are arranged such that they are pivotable with respect to each other.

9. Interior construction device according to one of the preceding claims, **characterized in that** the at least one first configuration comprises a sanitary configuration.

10. Interior construction device at least according to claim 2, **characterized in that** the at least one second configuration comprises a shower configuration.

## Revendications

1. Dispositif d'aménagement intérieur, notamment pour un camping-car, une caravane et/ou une camionnette, avec une unité de base de toilette (10), laquelle est dans une première configuration disposée dans une zone sanitaire (12), l'unité de base de toilette (10) étant implémentée dans un état assemblé ainsi qu'elle est au moins partiellement déplaçable, **caractérisé par** une unité de couverture de lavabo (20), laquelle est prévue à couvrir un lavabo (26) dans au moins une deuxième configuration.

2. Dispositif d'aménagement intérieur selon la revendication 1, **caractérisé en ce que** pour obtenir une deuxième configuration, l'unité de base de toilette (10) est implémentée ainsi qu'elle est au moins partiellement déplaçable dès la zone sanitaire (12) dans une zone de rangement de toilette (14).

3. Dispositif d'aménagement intérieur selon l'une quelconque des revendications 1 ou 2, **caractérisé en ce que** l'unité de base de toilette (10) est implémentée au moins pivotable.

4. Dispositif d'aménagement intérieur selon la revendication 3, **caractérisé en ce qu'** un axe de pivotement (16) de l'unité de base de toilette (10) s'étend au moins substantiellement perpendiculairement à un plancher d'aménagement intérieur (18).

5. Dispositif d'aménagement intérieur selon l'une quelconque des revendications précédentes, **caractérisé en ce que** l'unité de couverture de lavabo (20) est supportée ainsi qu'elle est pivotable.

6. Dispositif d'aménagement intérieur selon l'une quelconque des revendications précédentes, **caractérisé en ce que** l'unité de couverture de lavabo (20) présente au moins deux éléments de couverture de lavabo (22, 24), lesquels sont disposés ainsi qu'ils sont pivotables l'un relatif à l'autre.

7. Dispositif d'aménagement intérieur au moins selon la revendication 2, **caracterisé par** une unité de couverture de toilette (28) laquelle est prévue à couvrir la zone de rangement de toilette (14) vers la zone sanitaire (12) dans l'au moins une deuxième configuration.

8. Dispositif d'aménagement intérieur selon la revendication 7, **caractérisé en ce que** l'unité de couverture de toilette (28) présente au moins deux éléments de couverture de toilette (30, 32), lesquels sont disposés ainsi qu'ils sont pivotable l'un relatif à l'autre.

9. Dispositif d'aménagement intérieur selon l'une quelconque des revendications précédentes, **caractérisé en ce que** l'au moins une première configuration comprend une configuration sanitaire.

10. Dispositif d'aménagement intérieur au moins selon la revendication 2, **caracterisé en ce que** l'au moins une deuxième configuration comprend une configuration de douche.
